# EUROPÄISCHE PATENTSCHRIFT

(11) **EP 1 549 917 B1**
(45) Veröffentlichungstag und Bekanntmachung des Hinweises auf die Patenterteilung: **24.01.2007**
(21) Anmeldenummer: 03740023.1
(22) Anmeldetag: 23.05.2003
(51) Int. Cl.: G01F 5/00, G01F 15/12, G01F 1/684

(54) **LUFTSTROMMESSER MIT VORRICHTUNG ZUR ABSCHEIDUNG VON FREMDPARTIKELN**
AIRFLOW METER WITH DEVICE FOR THE SEPARATION OF FOREIGN PARTICLES
DEBITMETRE D'AIR DOTE D'UN DISPOSITIF DE SEPARATION DE PARTICULES ETRANGERES

(30) Priorität: 02.10.2002 DE 10246069
(43) Veröffentlichungstag der Anmeldung: 06.07.2005
(73) Patentinhaber: ROBERT BOSCH GMBH, 70442 Stuttgart (DE)
(72) Erfinder: LENZING, Thomas, 71726 Benningen (DE); REYMANN, Klaus, 70839 Gerlingen (DE); KONZELMANN, Uwe, 71679 Asperg (DE); SCHULZ, Torsten, 70771 Leinfelden-Echterdingen (DE)
(86) Internationale Anmeldenummer: PCT/DE2003/001673
(87) Internationale Veröffentlichungsnummer: WO 2004/031703

(56) Entgegenhaltungen:
- WO-A-02/18886
- WO-A-99/53274
- DE-A- 4 404 505
- G. GAUTHIER ET AL.: "Centrifugal instabilities in a curved rectangular duct of small aspect ratio" PHSYICS OF FLUIDS, Bd. 13, Nr. 10, 31. Oktober 2001 (2001-10-31), Seiten 2831-2834, XP002255294

## Beschreibung

### Stand der Technik

Die Erfindung betrifft eine Vorrichtung zur Bestimmung wenigstens eines Parameters eines in einer Leitung strömenden Mediums mit den Merkmalen des Oberbegriffs des unabhängigen Anspruchs 1.

Aus der DE 196 23 334 A1 ist eine Vorrichtung zur Bestimmung der Masse eines in einer Leitung strömenden Mediums bekannt, welche ein in die Leitung eingebrachtes Teil aufweist, in dem ein Messkanal mit einem Messelement angeordnet ist. Derartige Vorrichtungen werden beispielsweise als Luftmassenmesser im Luftansaugtrakt einer Brennkraftmaschine eingesetzt. In den Luftansaugtrakt können Spritzwasser und Staub eintreten, welche von dem Medium transportiert werden. Außerdem kann beim Abstellen der Brennkraftmaschine durch die Kurbelwellenentlüftungseinleitung Öldampf in den Luftansaugtrakt gelangen. Die mit dem Medium transportierten Flüssigkeits- oder Festkörperpartikel können bei der bekannten Vorrichtung in den Messkanal eindringen und das Messelement verschmutzen. Die daraus resultierende Veränderung der Sensorkennlinie führt zu nachteiligen Abweichungen der Messergebnisse von den tatsächlich vorliegenden Werten.

Aus der WO 02/18886 A ist eine Vorrichtung zur Bestimmung der Ansaugluftmasse einer Brennkraftmaschine bekannt, die mit einem Steckfühlerteil in eine Leitung derart eingebracht wird, dass ein Teilstrom des in der Leitung strömenden Mediums einen in dem Steckfühlerteil vorgesehenen Messkanal von einem Einlass bis zu einem Auslass in einer ersten Richtung durchströmt. In dem Messkanal ist ein Messelement zur Bestimmung der Ansaugluftmasse angeordnet. Der Messkanal weist zwischen seinem Einlass und seinem Auslass einen Abschnitt auf der als Umlenkkanal ausgebildet ist.

Aus G. Gauthier et Al.: "Centrifugal instabilities in a curved rectangular duct of small aspect ratio" PHYSICS OF FLUIDS, Bd. 13, Nr. 10, 31 Oktober 2001 (2001-10-31), Seiten 2831 -2834, XP002255294 ist bekannt, dass in einem gekrümmten Kanal in Abhängigkeit von der Strömungsrate Strömungswirbel entstehen können.

### Vorteile der Erfindung

Die erfindungsgemäße Vorrichtung zur Bestimmung wenigstens eines Parameters eines in einer Leitung strömenden Mediums mit den kennzeichnenden Merkmalen des Anspruchs 1 hat den Vorteil, dass die Gefahr einer Kontamination des Messelementes mit Flüssigkeitströpfchen oder Festkörperteilchen deutlich verringert wird und ein Kennliniendrift zuverlässig vermieden wird. Durch wenigstens eine in einem Kanalabschnitt des Messkanals vorgesehene Stufe, werden in diesem Kanalabschnitt Strömungswirbel verursacht. In den Strömungswirbeln bewegen sich die Flüssigkeitströpfchen und Festkörperteilchen nicht gleichgerichtet in Längsrichtung des Kanals, sondern näherungsweise schrauben- oder spiralförmig. Vorteilhaft wird dadurch infolge der unterschiedlichen Dichten von Flüssigkeit und Festkörperteilchen einerseits und dem Medium andererseits und den daraus resultierenden unterschiedlichen Zentrifugalkräften erreicht, dass sich die in den Messkanal eingetretenen Flüssigkeit und Festkörperteilchen in dem Messkanal ablagern, bevor sie das Messelement erreichen können.

Vorteilhafte Ausführungsbeispiele und Weiterentwicklungen der Erfindung werden durch die in den abhängigen Ansprüchen angegebenen Merkmale ermöglicht.

Bekannt ist, dass beim Betrieb der Brennkraftmaschine Luft in einer Hauptströmungsrichtung in der Leitung des Luftansaugtrakts strömt, wobei ein Teilstrom dieser Luft in den Messkanal der Vorrichtung gelangt und diesen in einer vorbestimmten ersten Richtung vom Einlass zum Auslass durchströmt. Kommt es nun zu einer kurzen Rückströmung des Mediums in der Leitung entgegen der eigentlichen Hauptströmungsrichtung, beispielsweise beim Abschalten der Brennkraftmaschine, so können Öltröpfchen und ähnliche Verschmutzungen, die durch die Kurbelgehäuse-Lüftungseinleitung des Fahrzeuges in die Leitung des Ansaugtraktes gelangen und durch die Rückströmung entgegen der Hauptströmungsrichtung transportiert werden, durch den Auslass des Messkanals in den Messkanal eindringen. Besonders vorteilhaft ist daher ein Ausführungsbeispiel der erfindungsgemäßen Vorrichtung, bei dem der mit der Strömungswirbel hervorrufenden wenigstens einen Stufe versehene Kanalabschnitt in der ersten Richtung gesehen zwischen dem Messelement und dem Auslass des Messkanals angeordnet ist, wodurch in diesem Kanalabschnitt Strömungswirbel in der Rückströmung entstehen, die zur Ablagerung der Öltröpfchen führen, bevor diese das Messelement erreichen können.

In einfacher Weise kann die wenigstens eine Stufe durch eine Strukturierung der Innenwandung des Kanalabschnitts gebildet werden. Besonders vorteilhaft ist es, wenn die Innenwandung des Kanalabschnitts mehrere hintereinander angeordnete Stufen aufweist. Die Strömungswirbeln können noch dadurch verstärkt werden, dass an gegenüberliegenden Innenwänden des Kanalabschnitts wenigstens eine Stufe ausgebildet ist.

Bei einem bevorzugten Ausführungsbeispiel weist der Messkanal einen ersten Abschnitt auf, der sich in seinem Innenquerschnitt in der ersten Richtung stetig verjüngt. An den ersten Abschnitt schließt sich mittelbar oder unmittelbar ein weiterer Abschnitt an, der sich in der ersten Richtung in seinem Innenquerschnitt stufenförmig vergrößert. Der sich in seinem Innenquerschnitt in der ersten Richtung stetig verjüngende Abschnitt wirkt vorzugsweise in der ersten Richtung als Beschleunigungsrampe für den Teilstrom des Mediums, der den Messkanal in Vorwärtsrichtung vom Einlass zum Auslass durchströmt. Der zweite Abschnitt wirkt vorzugsweise im Falle einer Rückströmung des Mediums in dem Messkanal, wobei vorteilhaft an mehreren Stufen hintereinander Strömungswirbel entstehen und sich Flüssigkeitströpfchen und Festkörperpartikel an der Innenwandung dieses Messkanalabschnittes niederschlagen.

Vorteilhaft weisen die in dem Kanalabschnitt vorhandenen Stufen eine wenigstens teilweise schräg und/oder wenigstens teilweise quer zur Strömungsrichtung des Mediums in dem Messkanal verlaufende Kante auf. Hierdurch kann erreicht werden, dass der über die Kante strömende Mediumstrom schraubenförmige oder spiralartige Strömungswirbel hervorruft, die sich um gedachte Achsen drehen, die schräg und/oder quer zur Strömungsrichtung verlaufen.

Dadurch, dass die wenigstens eine Stufe eine im wesentlichen quer zur Strömungsrichtung des Mediums in dem Messkanal verlaufende Kante aufweist und dass die Stufe eine sich zu der Kante der Stufe hin öffnende Aussparung aufweist, deren Kanten wenigstens teilweise schräg oder parallel zur Strömungsrichtung des Mediums in dem Messkanal verlaufen, kann erreicht werden, dass sich schraubenartige oder spiralartige Strömungswirbel bilden, die sich um gedachte Achsen drehen, die in etwa längs zur Strömungsrichtung verlaufen. Letztere sind besonders vorteilhaft zur Abscheidung von Öltröpfchen und Verunreinigungen auf den Innenwänden des Kanalabschnitts des Messkanals.

Um Strömungswirbel hervorzurufen, die in etwa längs zur Strömungsrichtung verlaufen, ist es auch möglich, die Innenwandung des Kanalabschnitts mit Strukturen zu versehen, deren Kanten in etwa längs zur Strömungsrichtung in dem Messkanal verlaufen. Diese Strukturen werden durch längs zur Strömungsrichtung in dem Messkanal verlaufende nach Innen vorspringende Längsrippen gebildet, die vorzugsweise in diesem Kanalabschnitt über den gesamten Innenumfang der Innenwandung verteilt angeordnet sind.

### Zeichnungen

Ausführungsbeispiele der Erfindung sind in den Zeichnungen dargestellt und werden in der nachfolgenden Beschreibung erläutert. Es zeigt
Fig. 1 einen Querschnitt durch ein erstes Ausführungsbeispiel des mit dem Messkanal versehenen Teils der erfindungsgemäßen Vorrichtung in einer in die Leitung eingesetzten Position,
Fig. 2 bis 4 verschiedene Ausführungsbeispiele für die Strukturierung der Innenwandung des Strömungswirbel hervorrufenden Kanalabschnitts,
Fig. 5 einen Querschnitt durch ein weiteres Ausführungsbeispiel des mit dem Messkanal versehenen Teils der erfindungsgemäßen Vorrichtung in einer in die Leitung eingesetzten Position.

### Beschreibung der Ausführungsbeispiele

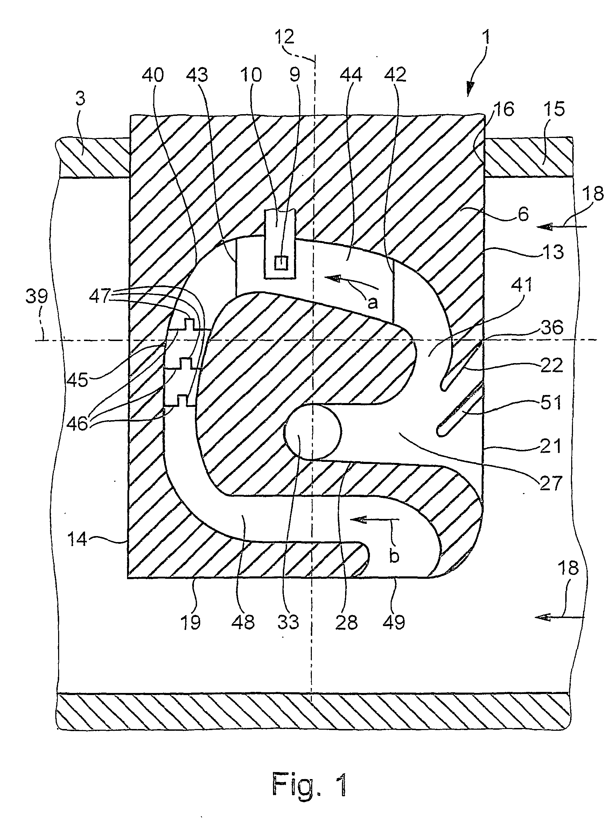

Fig. 1 zeigt einen Ausschnitt aus einer Leitung 3, in der ein Medium in einer Hauptströmungsrichtung 18 strömt. Die Leitung kann beispielsweise ein Saugrohr einer Brennkraftmaschine sein. Bei dem Medium handelt es sich beispielsweise um die in dem Saugrohr strömende Luft, die in der Hauptströmungsrichtung 18 der Brennkraftmaschine zugeführt wird. Eine erfindungsgemäße Vorrichtung 1 ist an der Leitung 3 derart angeordnet, dass ein Teil 6 der Vorrichtung in die Leitung 3 hineinragt und dem dort strömenden Medium mit einer vorbestimmten Ausrichtung ausgesetzt ist. Die Vorrichtung 1 zur Bestimmung zumindest eines Parameters des Mediums umfasst außer dem in die Leitung eingebrachten Teil 6 noch ein nicht näher dargestelltes Trägerteil mit einem elektrischen Anschluss, in welchem Trägerteil z.B. eine Auswerteelektronik untergebracht ist. Die Vorrichtung 1 kann beispielsweise mit dem Teil 6 durch eine Einstecköffnung 16 einer Wandung 15 der Leitung 3 eingeführt werden, welche Wandung 15 einen Strömungsquerschnitt der Leitung 3 begrenzt. Die Auswerteelektronik kann innerhalb und/oder außerhalb des Strömungsquerschnitts der Leitung 3 angeordnet werden.

Beispielsweise wird in der Vorrichtung 1 ein Messelement 9 auf einem Messelementträger 10 verwendet, der elektrisch mit der Auswerteelektronik verbunden ist. Mittels des Messelementes 9 wird beispielsweise als Parameter der Volumenstrom oder der Massenstrom des strömenden Mediums bestimmt. Weitere Parameter, die gemessen werden können, sind beispielsweise Druck, Temperatur, Konzentration eines Mediumbestandteils oder Strömungsgeschwindigkeit, die mittels geeigneter Sensorelemente bestimmbar sind.

Die Vorrichtung 1 hat beispielsweise eine Längsachse 12 in axialer Richtung, die beispielsweise in Einbaurichtung der Vorrichtung 1 in die Leitung 3 verläuft und die z.B. auch die Mittelachse sein kann. Die Richtung des strömenden Mediums, im folgenden als Hauptströmungsrichtung 18 bezeichnet, ist durch entsprechende Pfeile 18 in Fig. 1 gekennzeichnet und verläuft dort von rechts nach links. Beim Einbau des Teils 6 in die Leitung 3 ist sichergestellt, dass das Teil 6 in bezug auf die Hauptströmungsrichtung 18 des Mediums eine vorbestimmte Ausrichtung aufweist.

Das Teil 6 hat ein Gehäuse mit einer beispielsweise quaderförmigen Struktur mit einer in der Einbauposition der Hauptströmungsrichtung 18 des Mediums zugewandten Stirnwand 13 und einer davon abgewandten Rückwand 14, einer ersten Seitenwand und einer zweiten Seitenwand und einer beispielsweise parallel zur Hauptströmungsrichtung verlaufenden dritten Wand 19. Weiterhin weist das Teil 6 eine darin angeordnete Kanalstruktur mit einem Eingangsbereich 27 und einem von dem Eingangsbereich 27 abzweigenden Messkanal 40 auf. Durch die Anordnung der Vorrichtung 1 relativ zur Leitung 3 ist gewährleistet, dass das in der Hauptströmungsrichtung 18 strömende Medium in einer vorbestimmten Richtung auf das Teil 6 trifft und ein Teilstrom des Mediums in dieser Richtung durch eine Öffnung 21 an der Stirnseite 13 in den Eingangsbereich 27 gelangt. Die Öffnung 21 kann beispielsweise senkrecht zur Hauptströmungsrichtung 18 ausgerichtet sein, aber auch eine andere Orientierung der Öffnung 21 zur Hauptströmungsrichtung 18 ist denkbar. Von dem Eingangsbereich 27 aus gelangt das Medium durch einen Einlass 41 teilweise in den mit dem Messelement 9 versehenen von dem Eingangsbereich abzweigenden Messkanal 40. Teilweise strömt es weiter in eine hinter dem Einlass des Messkanals liegende Ausscheidungszone 28, welche über wenigstens eine in der ersten Seitenwand und/oder der zweiten Seitenwand und/oder der Wand 19 angeordneten Ausscheidungsöffnung 33 mit der Leitung 3 verbunden ist. In dem strömenden Medium sind beispielsweise Flüssigkeits- und/oder Festkörperpartikel vorhanden, wie Öl- oder Wasserpartikel, die das Messelement 9 verschmutzen oder beschädigen könnten. Durch die Ausscheidungsöffnung 33 können die Flüssigkeits- und Festkörperpartikel wieder in die Leitung 3 zurückströmen. Die Hauptströmungsrichtung 18 verläuft bei dem in Fig. 1 gezeigten Ausführungsbeispiel in einer Ebene, in der auch die Ausscheidungsöffnung 33 angeordnet ist. Die Ebene, in der die Ausscheidungsöffnung 33 angeordnet ist, kann aber auch unter einem von null Grad verschiedenen Winkel zur Hauptströmungsrichtung 18 angeordnet sein.

Die Öffnung 21 an der Stirnseite 13 des Teils 6 hat in der axialen Richtung 12 eine obere Kante 36, die dem Messelement 9 in axialer Richtung 12 am nächsten ist. Eine obere gedachte Ebene 39 verläuft durch die obere Kante 36 sowie senkrecht zur Zeichnungsebene in Fig. 1 und parallel zur Hauptströmungsrichtung 18. Die Ausscheidungsöffnung 33 ist in axialer Richtung 12 unterhalb dieser oberen Ebene 39 angeordnet. Der Eingangsbereich 27 ist im Bereich der Öffnung 21 mit schrägen oder gekrümmten Flächen 22 und mit einer Trennwand 51 versehen, die so gestaltet ist, dass das in den Eingangsbereich einströmende Medium von der oberen Ebene 39 weggelenkt wird.

Da die Flüssigkeits- und oder Festkörperteilchen größer sind und eine höhere Dichte als das gasförmige strömende Medium aufweisen, bewegen sie sich in axialer Richtung 12 von der oberen Ebene 39 weg. Da die Ausscheidungsöffnung 33 unterhalb der oberen Ebene 39 angeordnet ist, sammeln sich die Flüssigkeits- und Festkörperpartikel in der Ausscheidungszone 28 und werden durch die an der Ausscheidungsöffnung 33 vorbeiströmende Luft in die Leitung 3 hinaus gesaugt.

Ausgehend vom Eingangsbereich 27 erstreckt sich ein erster Abschnitt des Messkanals 40 von dem Einlass 41 zunächst in etwa zur Einstecköffnung 16 hin. Der durch den Einlass 41 in einer ersten Richtung a in den Messkanal 40 gelangte Teilstrom strömt zum Messelement 9 hin. An diesen ersten Abschnitt schließt sich ein weiterer Abschnitt 44 an, in dem der Teilstrom umgelenkt wird und an dem Messelement 9 vorbeiströmt. Etwa von der in Fig. 1 dargestellten Linie 42 vor dem Messelement bis zur Linie 43 hinter dem Messelement 9 in Richtung a der Strömung gesehen verjüngt sich der Querschnitt des weiteren Abschnitts 44. Dies wird durch zwei einander zugewandte Beschleunigungsrampen erreicht, wobei der Betrachter in der Darstellung von Fig. 1 senkrecht auf die erste Rampe sieht. Durch die Verjüngung des Querschnitt bzw. durch die Beschleunigungsrampen in Form einer allseitigen oder teilweisen Verengung der Seitenflächen des Messkanals 40 wird das Medium rasch in der ersten Richtung a durch den Messkanal transportiert und dadurch nachkommende Luft aus dem Eingangsbereich 27 abgesaugt. Von dem Abschnitt 44 aus strömt das Medium weiter und wird in einen Kanalschnitt 45 des Messkanals umgelenkt, der sich in etwa in axialer Richtung 12 von der Einstecköffnung 16 weg erstreckt. Von diesem Abschnitt aus, wird es in einen weiteren Abschnitt 48 umgelenkt, der beispielsweise entgegen der Hauptströmungsrichtung 18 verläuft, und gelangt durch einen Auslass 49 des Messkanals 40, der beispielsweise senkrecht zur Hauptströmungsrichtung 18 oder unter einem von null Grad verschiedenen Winkel zur Hauptströmungsrichtung 18 angeordnet ist, in die Leitung 3. Der Messkanal 40 ist hier also beispielsweise in etwa C-förmig ausgebildet.

Strömt das Medium in der Leitung 3 entgegen der eigentlichen Hauptströmungsrichtung 18, beispielsweise beim Abschalten der Brennkraftmaschine, so können Öltröpfchen und ähnliche Verschmutzungen, die durch die Kurbelgehäuse-Lüftungseinleitung des Fahrzeuges in die Leitung des Ansaugtraktes gelangen und entgegen der Hauptströmungsrichtung 18 transportiert werden, durch den Auslass 49 des Messkanals 40 in diesen eindringen. Dieser Mediumstrom strömt in einer zur ersten Richtung a entgegengesetzten zweiten Richtung b (Rückströmung) in den Messkanal, wie in Fig. 1 dargestellt ist. Wie in Fig. 1 weiterhin zu erkennen ist, sind in dem Kanalabschnitt 45 in der Richtung b der Rückströmung hinter dem Auslass 49 und vor dem Messelement 9 Mitteln 46 angeordnet, die im Rückströmungsfall in diesem Kanalabschnitt Strömungswirbel hervorrufen und zur Ablagerung der Öltröpfchen führen, bevor diese das Messelement erreichen können. Diese Mittel können prinzipiell auf verschiedene Weise ausgebildet sein. Beispielsweise ist es denkbar, in den Kanalabschnitt Trennwände, Stege oder ähnliche Mittel einzubauen, die eine Wirbelbildung verursachen. Bei dem hier dargestellten bevorzugten Ausführungsbeispiel werden die Mittel durch eine Strukturierung der Innenwandung des Kanalabschnitts gebildet. Der Kanalabschnitts 45 vergrößert sich in der ersten Richtung a in seinem Innenquerschnitt stufenförmig, wobei zumindest eine Stufe vorgesehen ist und die Stufen 46 eine wenigstens teilweise schräg und/oder wenigstens teilweise quer zur Strömungsrichtung b des Mediums in dem Messkanal 40 verlaufende Kante 57 aufweisen. In Fig. 1 sind die Stufen an der in Fig. 1 sichtbaren Innenwand des Kanalabschnitts 45 ausgebildet und auf einer dieser Innenwand gegenüberliegenden in der Querschnittdarstellung nicht sichtbaren weiteren Innenwand des Kanalabschnitts 45.

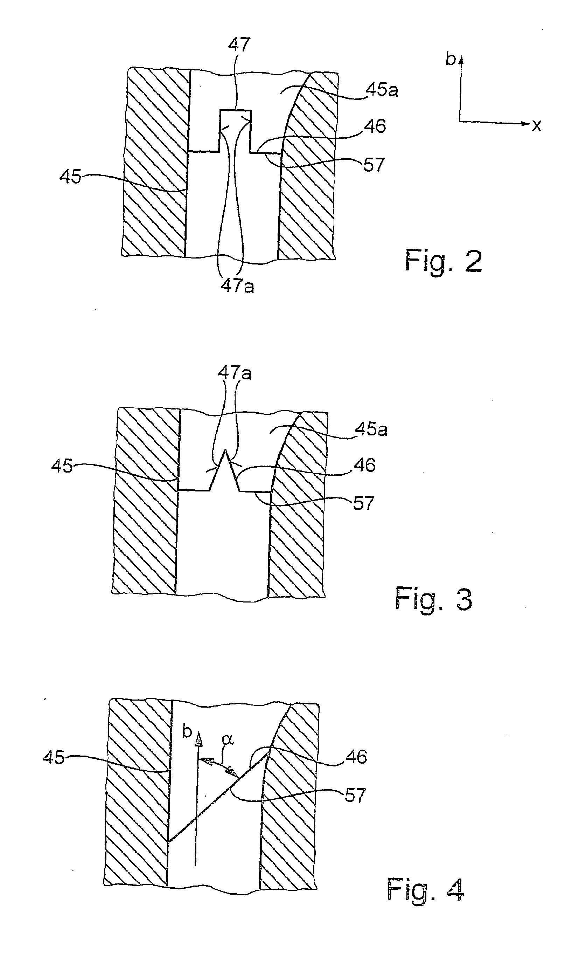

Fig. 2 zeigt eine vergrößerte Detailansicht. Die wenigstens eine Stufe 46 weist eine im wesentlichen quer zur Strömungsrichtung des Mediums in dem Messkanal 40 in Richtung x verlaufende Kante 57 auf. Wie weiterhin zu erkennen ist, weist die Stufe 46 zusätzlich eine sich zu der Kante 57 hin öffnende Aussparung 47 auf, deren Kanten 47a wenigstens teilweise schräg oder parallel zur Strömungsrichtung des Mediums (Richtung b) in dem Messkanal 40 verlaufen. Im Falle einer Rückströmung in Richtung b strömt der Mediumstrom auf die Stufe 46 zu. Dabei entstehen an der quer zur Richtung b verlaufenden Kante 57 schraubenartige oder spiralartige Strömungswirbel, deren Achsen in X-Richtung verlaufen. Zusätzlich entstehen an den Kanten 47a schraubenartige oder spiralartige Strömungswirbel, deren Achsen in Richtung b verlaufen. Die sich an den Stufen bildenden Strömungswirbel sind Makrowirbel, deren axiale und radiale Ausdehnung im Millimeterbereich liegt. Durch die Strömungswirbel wird erreicht, dass sich Flüssigkeitströpfchen und Schmutzpartikel an der Innenwandung des Kanalabschnitts 45 ablagern, bevor sie das Messelement 9 erreichen. Zur Klarstellung sei hier nur erwähnt, dass unter "Strömungsrichtung a" beziehungsweise "Strömungsrichtung b" im Kontext der Anmeldung die Richtung der Strömung vom Einlass zum Auslass des Messkanal beziehungsweise in umgekehrter Richtung vom Auslass zum Einlass verstanden wird und nicht die Richtung der zirkulierenden Strömung in den gebildeten Wirbeln.

Ein modifiziertes Ausführungsbeispiel ist in Fig. 3 dargestellt. Hier verlaufen die Kanten 47a der Aussparung 47 schräg zur Strömungsrichtung b der Rückströmung, so dass sich an der Aussparung 47 auch Strömungswirbel bilden, deren Achsen schräg zur Strömungsrichtung b verlaufen.

Ein weiteres Ausführungsbeispiel ist in Fig. 4 gezeigt. Hier ist die Stufe 46 mit einer schräg zur Strömungsrichtung b der Rückströmung verlaufenden Kante 57 ausgebildet, so dass sich Strömungswirbel mit einer unter dem Winkel α schräg zur Strömungsrichtung b verlaufenden Achse bilden.

In den Ausführungsbeispielen von Fig. 1 bis Fig. 4 sind Stufen 46 in der Strömungsrichtung a gesehen hinter dem Messelement angeordnet, um im Falle einer Rückströmung des Mediums in Richtung b Strömungswirbel hervorzurufen. Es ist aber auch möglich, Stufen oder andere Strukturen zwischen dem Einlass 41 und dem Messelement vorzusehen, um auch in einem Mediumstrom in der vom Einlass zum Auslass des Messkanals gerichteten Strömungsrichtung a Strömungswirbel zu generieren, damit sich Feuchtigkeit und Festkörperpartikel, die durch den Einlass in den Messkanal gelangt sind, vor dem Messelement auf der Innenwandung ablagern.

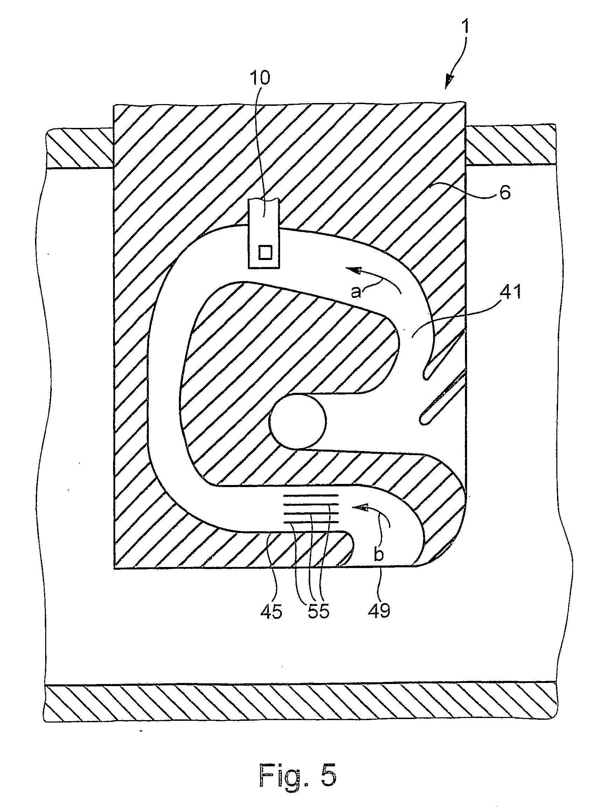

Ein weiteres Ausführungsbeispiel ist in Fig. 5 gezeigt. Bei diesem Ausführungsbeispiel ist der mit den Strukturen versehene Kanalschnitt 45 näher beim Auslass 49 angeordnet. Die Innenwandung 45a des Kanalabschnitts 45 ist mit Strukturen versehen, deren Kanten in etwa längs zur Strömungsrichtung b in dem Messkanal 40 verlaufen. Die Strukturen können in besonders vorteilhafter Weise durch längs zur Strömungsrichtung in dem Messkanal verlaufende nach Innen vorspringende Längsrippen 55 gebildet werden, die vorzugsweise in diesem Kanalabschnitt über den gesamten Innenumfang der Innenwandung verteilt angeordnet sind. Durch die Rippen 55 bilden sich im Falle einer Rückströmung in dem Kanalabschnitt 45 Strömungswirbel längs zur Strömungsrichtung b. Infolge der unterschiedlichen Dichte von Öltröpfchen und Luft und der daraus resultierenden unterschiedlich großen Zentrifugalkräfte, scheidet sich das in der Luft befindliche Öl auf der Oberfläche der Innenwandung des Messkanals ab.

## Patentansprüche

1. Vorrichtung zur Bestimmung wenigstens eines Parameters eines in einer Leitung (3) in einer Hauptströmungsrichtung (18) strömenden Mediums, insbesondere der Ansaugluftmasse einer Brennkraftmaschine, mit einem Teil (6), das mit einer vorbestimmten Ausrichtung in Bezug auf die Hauptströmungsrichtung (18) in die Leitung (3) derart einbringbar ist, dass ein Teilstrom des in der Leitung in der Hauptströmungsrichtung (18) strömenden Mediums wenigstens einen in dem Teil (6) vorgesehen Messkanal (40) in einer ersten Richtung (a) von einem Einlass (41) des Messkanals bis zu einem Auslass (49) des Messkanals durchströmt, und mit wenigstens einem in dem Messkanal (40) angeordneten Messelement (9) zur Bestimmung des wenigstens einen Parameters, wobei der Messkanal (40) zwischen seinem Einlass (41) und seinem Auslass (49) wenigstens einen Kanalabschnitt (45) aufweist, in dem Mittel angeordnet sind, die in diesem Kanalabschnitt Strömungswirbel verursachen, **dadurch gekennzeichnet, dass** die Mittel durch eine Strukturierung der Innenwandung (45a) des Kanalabschnitts (45) gebildet werden, wobei die Innenwandung (45a) des Kanalabschnitts (45) wenigstens eine Stufe (46) und vorzugsweise mehrere hintereinander angeordnete Stufen (46) aufweist.

2. Vorrichtung nach Anspruch 1, **dadurch gekennzeichnet, dass** der mit der wenigstens einen Stufe (46) versehene Kanalabschnitt (45) in der ersten Richtung (a) gesehen zwischen dem Messelement (9) und dem Auslass (41) des Messkanals (40) angeordnet ist und dass die wenigstens eine Stufe (46) insbesondere im Falle einer von dem Auslass (49) zu dem Einlass (41) des Messkanals in einer zur ersten Richtung (a) entgegengesetzten zweiten Richtung (b) strömenden Rückströmung des Mediums in dem Kanalabschnitt (45) Strömungswirbel verursachen.

3. Vorrichtung nach Anspruch 1, **dadurch gekennzeichnet, dass** an sich gegenüberliegenden Innenwänden des Kanalabschnitts (45) wenigstens eine Stufe (46) ausgebildet ist.

4. Vorrichtung nach Anspruch 1, **dadurch gekennzeichnet, dass** der Messkanal (40) einen ersten Abschnitt (44) aufweist, der sich in seinem Innenquerschnitt in der ersten Richtung (a) stetig verjüngt und dass sich an den ersten Abschnitt (44) mittelbar oder unmittelbar ein weiterer Abschnitt (45) anschließt, der sich in der ersten Richtung (a) in seinem Innenquerschnitt stufenförmig vergrößert.

5. Vorrichtung nach einem der Ansprüche 1 bis 4, **dadurch gekennzeichnet, dass** die wenigstens eine Stufe (46) eine wenigstens teilweise schräg und/oder wenigstens teilweise quer zur Strömungsrichtung des Mediums in dem Messkanal (40) verlaufende Kante (57) aufweist.

6. Vorrichtung nach einem der Ansprüche 1 bis 5, **dadurch gekennzeichnet, dass** die wenigstens eine Stufe (46) eine im wesentlichen quer zur Strömungsrichtung des Mediums in dem Messkanal (40) verlaufende Kante (57) aufweist und dass die Stufe (46) eine sich zu der Kante (57) der Stufe hin öffnenden Aussparung (47) aufweist, deren Kanten (47a) wenigstens teilweise schräg oder parallel zur Strömungsrichtung des Mediums in dem Messkanal (40) verlaufen.

7. Vorrichtung zur Bestimmung wenigstens eines Parameters eines in einer Leitung (3) in einer Hauptströmungsrichtung (18) strömenden Mediums, insbesondere der Ansaugluftmasse einer Brennkraftmaschine, mit einem Teil (6), das mit einer vorbestimmten Ausrichtung in Bezug auf die Hauptströmungsrichtung (18) in die Leitung (3) derart einbringbar ist, dass ein Teilstrom des in der Leitung in der Hauptströmungsrichtung (18) strömenden Mediums wenigstens einen in dem Teil (6) vorgesehen Messkanal (40) in einer ersten Richtung (a) von einem Einlass (41) des Messkanals bis zu einem Auslass (49) des Messkanals durchströmt, und mit wenigstens einem in dem Messkanal (40) angeordneten Messelement (9) zur Bestimmung des wenigstens einen Parameters, wobei der Messkanal (40) zwischen seinem Einlass (41) und seinem Auslass (49) wenigstens einen Kanalabschnitt (45) aufweist, in dem Mittel angeordnet sind, die in diesem Kanalabschnitt Strömungswirbel verursachen, **dadurch gekennzeichnet, dass** die Innenwandung (45a) des Kanalabschnitts (45) mit Strukturen versehen ist, die durch längs zur Strömungsrichtung in dem Messkanal (40) verlaufende nach Innen vorspringende Längsrippen (55) gebildet werden, die vorzugsweise in diesem Kanalabschnitt (45) über den gesamten Innenumfang der Innenwandung (45a) verteilt angeordnet sind.

## Claims

1. Device for determining at least one parameter of a medium flowing in a line (3) in a main flow direction (18), in particular the intake air mass of an internal combustion engine, with a part (6) which can be introduced into the line (3) in a predetermined orientation with respect to the main flow direction (18), in such a way that a part-stream of the medium flowing in the line in the main flow direction (18) flows through at least one measuring duct (40), provided in the part (6), in a first direction (a) from an inlet (41) of the measuring duct as far as an outlet (49) of the measuring duct, and with at least one measuring element (9), arranged in the measuring duct (40), for determining the at least one parameter, the measuring duct (40) having between its inlet (41) and its outlet (49) at least one duct portion (45) in which are arranged means which induce flow vortices in this duct portion, **characterized in that** the means are formed by means of a structuring of the inner wall (45a) of the duct portion (45), the inner wall (45a) of the duct portion (45) having at least one step (46) and preferably a plurality of steps (46) arranged one behind the other.

2. Device according to Claim 1, **characterized in that** the duct portion (45) provided with the at least one step (46) is arranged between the measuring element (9) and the outlet (41) of the measuring duct (40), as seen in the first direction (a), and **in that** the at least one step (46) induces flow vortices in the duct portion (45) particularly in the case of a backflow of the medium flowing from the outlet (49) to the inlet (41) of the measuring duct in a second direction (b) opposite to the first direction (a).

3. Device according to Claim 1, **characterized in that** at least one step (46) is formed on inner walls of the duct portion (45) which lie opposite one another.

4. Device according to Claim 1, **characterized in that** the measuring duct (40) has a first portion (44) which narrows continuously in its inner cross section in the first direction (a), and **in that** the first portion (44) is followed indirectly or directly by a further portion (45) which increases in size in its inner cross section in stepped form in the first direction (a).

5. Device according to one of Claims 1 to 4, **characterized in that** the at least one step (46) has an edge (57) running at least partially obliquely and/or at least partially transversely with respect to the direction of flow of the medium in the measuring duct (40).

6. Device according to one of Claims 1 to 5, **characterized in that** the at least one step (46) has an edge (57) running essentially transversely with respect to the direction of flow of the medium in the measuring duct (40), and **in that** the step (46) has a clearance (47) which opens towards the edge (57) of the step and the edges (47a) of which run at least partially obliquely or parallel with respect to the direction of flow of the medium in the measuring duct (40).

7. Device for determining at least one parameter of a medium flowing in a line (3) in a main flow direction (18), in particular the intake air mass of an internal combustion engine, with a part (6) which can be introduced into the line (3) in a predetermined orientation with respect to the main flow direction (18), in such a way that a part-stream of the medium flowing in the line in the main flow direction (18) flows through at least one measuring duct (40), provided in the part (6), in a first direction (a) from an inlet (41) of the measuring duct as far as an outlet (49) of the measuring duct, and with at least one measuring element (9), arranged in the measuring duct (40), for determining the at least one parameter, the measuring duct (40) having between its inlet (41) and its outlet (49) at least one duct portion (45) in which are arranged means which induce flow vortices in this duct portion, **characterized in that** the inner wall (45a) of the duct portion (45) is provided with structures which are formed by inwardly projecting longitudinal ribs (55) which run longitudinally with respect to the direction of flow in the measuring duct (40) and which are preferably arranged in this duct portion (45) so as to be distributed over the entire inner circumference of the inner wall (45a).

## Revendications

1. Dispositif pour déterminer au moins un paramètre d'un fluide s'écoulant dans une conduite (3) dans une direction d'écoulement principale (18), en particulier de la masse d'air d'admission d'un moteur à combustion interne, comprenant un composant (6) insérable dans la conduite (3) selon une orientation prédéfinie par rapport à la direction d'écoulement principale (18), de sorte qu'un flux partiel du fluide s'écoulant dans la conduite dans la direction d'écoulement principale traverse au moins un canal de mesure (40) prévu dans le composant (6) dans une première direction (a) depuis une entrée (41) jusqu'à une sortie (49) du canal de mesure, et au moins un élément de mesure (9) disposé dans le canal de mesure (40) pour déterminer l'au moins un paramètre, le canal de mesure (40) présentant entre son entrée (41) et sa sortie (49) au moins un segment de canal (45) dans lequel des moyens y génèrent des turbulences d'écoulement,
**caractérisé en ce que**
les moyens sont formés par une structuration de la paroi intérieure (45a) du segment de canal (45), qui présente au moins un étage (46) et de préférence plusieurs étages (46) disposés les uns derrière les autres.

2. Dispositif selon la revendication 1,
**caractérisé en ce que**
le segment de canal (45) muni de l'au moins un étage (46), vu dans la première direction (a), est disposé entre l'élément de mesure (9) et la sortie (41) du canal de mesure (40), et l'au moins un étage (46) génère des turbulences d'écoulement du fluide dans le segment de canal (45), en particulier en présence d'un reflux s'écoulant de la sortie (49) vers l'entrée (41) du canal de mesure dans une deuxième direction (b) opposée à la première direction (a).

3. Dispositif selon la revendication 1,
**caractérisé en ce qu'**
au moins un étage (46) est formé sur des parois intérieures opposées du segment de canal (45).

4. Dispositif selon la revendication 1,
**caractérisé en ce que**
le canal de mesure (40) présente un premier segment (44) dont la section transversale intérieure se rétrécit constamment dans la première direction (a), et au premier segment (44) est raccordé directement ou indirectement un autre segment (45) dont la section transversale intérieure s'agrandit graduellement dans la première direction (a).

5. Dispositif selon l'une des revendications 1 à 4,
**caractérisé en ce que**
l'au moins un étage (46) présente une arête (57) s'étendant au moins en partie en biais et/ou au moins en partie transversalement à la direction d'écoulement du fluide dans le canal de mesure (40).

6. Dispositif selon l'une des revendications 1 à 5,
**caractérisé en ce que**
l'au moins un étage (46) présente une arête (57) s'étendant pour l'essentiel transversalement à la direction d'écoulement du fluide dans le canal de mesure (40), et l'étage (46) présente un évidement (47) ouvert vers l'arête (57) de l'étage et dont les arêtes (47a) s'étendent au moins en partie en biais ou parallèlement à la direction d'écoulement du fluide dans le canal de mesure (40).

7. Dispositif pour déterminer au moins un paramètre d'un fluide s'écoulant dans une conduite (3) dans une direction d'écoulement principale (18), en particulier de la masse d'air d'admission d'un moteur à combustion interne, comprenant un composant (6) insérable dans la conduite (3) selon une orientation prédéfinie par rapport à la direction d'écoulement principale (18), de sorte qu'un flux partiel du fluide s'écoulant dans la conduite dans la direction d'écoulement principale, traverse au moins un canal de mesure (40) prévu dans le composant (6) dans une première direction (a) depuis une entrée (41) jusqu'à une sortie (49) du canal de mesure, et au moins un élément de mesure (9) disposé dans le canal de mesure (40) pour déterminer l'au moins un paramètre, le canal de mesure (40) présentant entre son entrée (41) et sa sortie (49) au moins un segment de canal (45) dans lequel des moyens y génèrent des turbulences d'écoulement,
**caractérisé en ce que**
la paroi intérieure (45a) du segment de canal (45) est munie de structures formées par des nervures longitudinales (55) en saillie vers l'intérieur qui s'étendent le long de la direction d'écoulement dans le canal de mesure (40), et sont de préférence réparties sur toute la périphérie de la paroi intérieure (45a) du segment de canal (45).
